# EUROPÄISCHE PATENTSCHRIFT

(11) **EP 2 994 697 B1**
(45) Veröffentlichungstag und Bekanntmachung des Hinweises auf die Patenterteilung: **27.02.2019**
(21) Anmeldenummer: 14721845.7
(22) Anmeldetag: 05.05.2014
(51) Int. Cl.: F24C 15/32, A21B 3/04

(54) **DAMPFGARGERÄT**
STEAM COOKING DEVICE
APPAREIL DE CUISSON À LA VAPEUR

(30) Priorität: 08.05.2013 EP 13290103
(43) Veröffentlichungstag der Anmeldung: 16.03.2016
(73) Patentinhaber: BSH Hausgeräte GmbH, 81739 München (DE)
(72) Erfinder: ADAM, Julien, F-67100 Strasbourg (FR); HOFFMANN, Olivier, F-67120 Molsheim (FR); OUMGHARI, Radwane, F-67400 Illkirch (FR)
(86) Internationale Anmeldenummer: PCT/EP2014/059049
(87) Internationale Veröffentlichungsnummer: WO 2014/180760

(56) Entgegenhaltungen:
- WO-A1-2012/140003
- WO-A2-2007/098732
- WO-A2-2012/022609
- DE-A1- 3 821 205
- DE-A1-102011 110 784
- DE-C1- 10 245 773
- DE-U1- 20 002 833
- US-A1- 2002 139 253
- US-A1- 2013 036 918

## Beschreibung

Die Erfindung betrifft ein Dampfgargerät, aufweisend einen Garraum mit einer Garraum-Durchlassöffnung und ein mit der Garraum-Durchlassöffnung verbundenes Ventil.

Es sind Dampfgargeräte der betreffenden Art bekannt, bei denen das Ventil ein elektromagnetisch betriebenes Absperrventil ist, welches die Durchlassöffnung abwechselnd verschließt und öffnet. Bei geöffneter Durchlassöffnung kann Dampf aus dem Garraum in eine Umgebung bzw. nach Außen entweichen. Auch ist es dann - bei entsprechend schneller Betätigung des elektromagnetisch betriebenen Absperrventils - möglich, einen z.B. durch Kondensation in dem Garraum entstehenden Unterdruck auszugleichen. Auch wird im ausgeschalteten Zustand ein geöffnetes Absperrventil gewünscht, um den Garraum trocken zu bekommen und zu halten. Dazu muss das Absperrventil im unbestromten Zustand öffnend ausgestaltet sein. Zum Druckausgleich mit der Umgebung muss das Absperrventil zudem vergleichsweise schnell schaltbar sein. Zudem bedarf es dann einer zugehörigen Drucksensorik, mittels der ein schnelles Öffnen des Absperrventils zum Druckausgleich aktivierbar ist. Dies ist jedoch vergleichsweise aufwändig.

Anstelle von elektromagnetisch betriebenen Absperrventilen ist eine Verwendung von thermoaktuatorischen oder mit einem wärmeempfindlichen Stellglied angetriebenen Absperrventilen bekannt, welche bei hoher Temperatur, wie sie bei einem Heißluftbetrieb auftreten, offen sind und bei einem Dampfbetrieb bei typischerweise geringeren Temperaturen geschlossen sind. Solche thermoaktuatorischen Absperrventile weisen den Nachteil auf, dass sie im Dampfgarbetrieb, in welchem sie geschlossen sind, keinen Druckausgleich mit der Umgebung erlauben. Dazu mag vielmehr eine einfache weitere Durchlassöffnung des Garraums vorhanden sein, aus welcher jedoch heiße Luft oder Dampf ungehindert entweichen kann, was einen energetischen Verlust bewirkt.

US 2002/0139253 A1 offenbart einen anschlusslosen Dampfgarer, der ein isoliertes Gehäuse aufweist, welches einen interne Garraum umgibt, der durch eine Tür zugänglich ist. Ein Wasserreservoir befindet sich in dem Garraum und weist ein plattenartiges Heizelement auf, das am Boden angeordnet ist. Ein Dampfauslaß befindet sich in fluidischer Verbindung mit und benachbart zu einem elektrisch betriebenen Magnetventil, das normalerweise zur Atmosphäre hin offen ist. Ein Temperatursensor in physikalischer Nähe zu dem Dampfauslass und dem Magnetventil schließt einen Elektromagneten des Magnetventils, wenn sich die erfasste Dampftemperatur auf oder über einem eingestellten Niveau befindet.

DE 102 45 773 C1 offenbart eine Vorrichtung zur Wärmebehandlung von Lebensmitteln, mit einem Gehäuse, in dem eine Gerätezuluftöffnung und eine Geräteabluftöffnung vorgesehen ist, wobei innerhalb des Gehäuses ein beheizbarer Garraum vorgesehen ist, der eine Garraumzuluftöffnung und eine Garraumabluftöffnung aufweist, wobei ein Ventil zur Steuerung der Zu- und Abluft des Garraums vorgesehen ist. Das Ventil verbindet in einer Bypassstellung die Garraumabluftöffnung mit der Garraumzuluftöffnung und die Gerätezuluftöffnung mit der Geräteabluftöffnung. In der Bypassstellung erfolgt also lediglich eine Umwälzung der Garraumatmosphäre im Umluftbetrieb. Das Ventil lässt sich ferner auf Durchluftbetrieb umstellen, in dem Zuluft aus der Gerätezuluftöffnung in den Garraum zugeführt wird und Abluft über die Garraumabluftöffnung zur Geräteabluftöffnung austritt.

WO 2007/098732 A2 offenbart ein Verfahren zur Reinigung eines Gargeräts, insbesondere eines Dampfgargerätes, wobei in zumindest einer ersten Reinigungsphase zumindest ein erstes Reinigungsfluid durch zumindest einen Teil eines Innenraums des Gargeräts geleitet wir und in zumindest einer zweiten Reinigungsphase das durch den Innenraum geleitete erste Reinigungsfluid zumindest teilweise zumindest einem Dampferzeuger des Gargeräts zugeführt wird, sowie ein Gargerät.

WO 2012/022609 A2 offenbart eine Dampfgargerätvorrichtung mit einer einen Garraum begrenzenden Muffel und mit einem Dampferzeuger, der eine Verdampfungseinheit und eine Garraumentwässerungsvorrichtung aufweist. Um verbesserte Eigenschaften hinsichtlich eines Bedienerkomforts bereitzustellen, wird vorgeschlagen, dass die Garraumentwässerungsvorrichtung eine aktiv schließbare Ventileinheit aufweist, die in zumindest einem Betriebszustand ein flüssiges Fluid zurückhält.

DE 200 02 833 U1 offenbart ein Gargerät mit einem Garraum, einer Dampferzeugungseinrichtung, mindestens einer Heizeinrichtung und einer Gebläseeinrichtung, wobei eine Absperreinrichtung für den Garraum in Abhängigkeit von dem Garraumatmosphärenzustand zum Absperren oder Öffnen des Garraums gegenüber Umgebungsatmosphäre steuerbar und/oder regelbar ist.

WO 2012/140003 A1 offenbart ein Dampfgargerät, mit einem Garraum, der in mindestens einer der Seitenwände mindestens eine Überlauföffnung aufweist, wobei die Überlauföffnung mit einer Überlaufleitung, die sich in einen Überlaufablauf und ein Dampfablassrohr verzweigt, verbunden ist und an dem Dampfablassrohr mindestens ein Dampfventil vorgesehen ist, mittels dessen zumindest zeitweise der Querschnitt des Dampfablassrohres verändert werden kann. Es ist die **Aufgabe** der vorliegenden Erfindung, die Nachteile des Standes der Technik zumindest teilweise zu überwinden und insbesondere eine einfache Möglichkeit zur Belüftung und/oder Entlüftung des Garraums eines Dampfgargeräts bereitzustellen.

Diese Aufgabe wird gemäß den Merkmalen des unabhängigen Anspruchs 1 gelöst. Bevorzugte Ausführungsformen sind insbesondere den abhängigen Ansprüchen entnehmbar.

Die Aufgabe wird gelöst durch ein Dampfgargerät, aufweisend einen Garraum mit einer Garraum-Durchlassöffnung und ein mit der Durchlassöffnung verbundenes Ventil, wobei das Ventil ein Dreiwegeventil mit drei Anschlüssen oder Toren ist, dessen erstes, durchflussoffenes Tor an die Garraum-Durchlassöffnung angeschlossen ist, dessen zweites, durchflussvariables Tor zu einer Umgebung des Garraums offen ist und dessen drittes, durchflussvariables Tor an mindestens ein Absperrventil angeschlossen ist.

Ein solches Dampfgargerät weist den Vorteil auf, dass sich mit einfachen Mitteln eine Belüftung und/oder Entlüftung eines im Betrieb stehenden Garraums ohne einen signifikanten energetischen Verlust auch außerhalb eines lüftenden Zustands erreichen lässt. Durch das Ventil lässt sich also wahlweise eine luftdurchlässige Verbindung einerseits zwischen dem Garraum und der Umgebung des Garraums und andererseits zwischen dem Garraum und dem mindestens einen Absperrventil herstellen. Zur Verbindung zwischen dem Garraum und der Umgebung des Garraums ist das Ventil folglich so geschaltet, dass das erste Tor mit dem zweiten Tor pneumatisch oder gastechnisch verbunden ist, während das dritte Tor dagegen abgesperrt ist. Dadurch kann der Garraum beispielsweise trocken gehalten werden. Zur Verbindung zwischen dem Garraum und dem mindestens einen Absperrventil ist das Ventil hingegen so geschaltet, dass das erste Tor mit dem dritten Tor verbunden ist, während das zweite Tor dagegen abgesperrt ist. Dadurch kann der Garraum gezielt belüftet und/oder entlüftet werden, ohne dass außerhalb der Lüftungsintervalle es zu einem Verlust aufgewärmter, ggf. feuchter, Luft in die Umgebung kommt. Das erste Tor ist also in keiner der beiden Stellungen gegen die beiden anderen Tore abgesperrt und ist also immer durchfließbar, was hier auch als "durchflussoffen" bezeichnet wird. Das zweite Tor und das dritte Tor sind hingegen teilweise durchfließbar und teilweise gesperrt, was hier auch als "durchflussvariabel" bezeichnet wird.

Das Dampfgargerät ist insbesondere ein Haushalts-Dampfgargerät. Das Dampfgargerät mag insbesondere ein Kombinationsgerät sein, welches eine Dampfgarfunktionalität und mindestens eine weitere Speisenbehandlungsfunktionalität aufweist, z.B. eine Heißluftfunktionalität, eine Backofenfunktionalität und/oder eine Mikrowellenfunktionalität.

Es ist eine Ausgestaltung, dass das dritte Tor pneumatisch bzw. gastechnisch parallel an ein Überdruckventil und an ein Unterdruckventil angeschlossen ist. Dadurch können eine Belüftung und eine Entlüftung unabhängig voneinander durchgeführt werden.

Es ist eine Weiterbildung, dass das Überdruckventil und/oder das Unterdruckventil elektrisch betätigbar sind. Es ist eine andere Weiterbildung, dass das Überdruckventil und/oder das Unterdruckventil selbsttätig schaltend sind.

Es ist eine Weiterbildung, dass das Überdruckventil und/oder das Unterdruckventil als ein Rückschlagventil ausgebildet ist, weil dies einen Gasdurchlass sicher nur in eine Richtung erlaubt.

Es ist eine Weiterbildung davon, dass das Rückschlagventil als ein federunterstütztes Rückschlagventil ausgebildet ist, z.B. ein Kugelrückschlagventil oder ein Tellerrückschlagventil. Die Verwendung eines federunterstützten Rückschlagventils erlaubt es, dass sich das Ventil erst bei einer vorbestimmten Druckdifferenz öffnet, wodurch ein Öffnen bei nur geringen Druckschwankungen vermieden werden kann.

Es ist ferner eine Weiterbildung, dass das Überdruckventil und/oder das Unterdruckventil als eine Rückschlagklappe ausgebildet sind, insbesondere als eine eigengewichtgesteuerte Rückschlagklappe. Dies lässt einen besonders einfachen Aufbau zu.

Es wird besonders bevorzugt, dass das Überdruckventil ein federunterstütztes Rückschlagventil ist und das Unterdruckventil eine Rückschlagklappe ist.

Es ist noch eine Ausgestaltung, dass eine pneumatische Verbindung von dem ersten Tor zu dem zweiten Tor oder zu dem dritten Tor mittels eines wärmeempfindlichen Stellglieds umschaltbar ist. Die an dem wärmeempfindlichen Stellglied anliegende Temperatur ist dabei mit einer Temperatur in dem Garraum korreliert. Dadurch kann beispielsweise auf einfache und preiswerte Weise zwischen einem bei typischerweise bei einer vergleichsweise geringen Temperatur ablaufenden Dampfbehandlungsbetrieb und einem typischerweise bei einer höheren Temperatur ablaufenden Heißluftbetrieb umgeschaltet werden. Das wärmeempfindliche Stellglied mag beispielsweise ein Bimetallschalter sein. Das wärmeempfindliche Stellglied mag aber auch ein elektrisch umschaltbares Stellglied sein, welches mit mindestens einer in oder an dem Garraum angeordneten Wärmemesseinrichtung, z.B. Wärmesensor, datentechnisch gekoppelt ist. Die datentechnische Kopplung mag direkt oder z.B. über eine Auswerte- und/oder Steuerschaltung erfolgen.

Es ist eine alternative oder zusätzliche Ausgestaltung, dass eine pneumatische Verbindung von dem ersten Tor zu dem zweiten Tor oder zu dem dritten Tor mittels eines feuchteempfindlichen Stellglieds umschaltbar ist. Dieses schaltet auf der Basis eines Feuchtigkeitswerts um, welcher mit der Feuchtigkeit in dem Garraum korreliert. Ansonsten mag das feuchteempfindliche Stellglied analog zu dem wärmeempfindlichen Stellglied ausgebildet sein.

Es ist ferner eine Ausgestaltung, dass das Ventil dazu eingerichtet ist, (i) in einem ausgeschalteten Zustand oder bei einem Heißluftbetrieb des Dampfgargeräts eine pneumatische Verbindung zwischen dem ersten Tor zu dem zweiten Tor bereitzustellen und (ii) in einem Dampfbehandlungsbetrieb des Dampfgargeräts eine pneumatische Verbindung zwischen dem ersten Tor zu dem dritten Tor bereitzustellen. Dadurch kann in dem Dampfbehandlungsbetrieb eine gezielte, kurzzeitige Belüftung und/oder Entlüftung des Garraums erreicht werden, während in dem Heißluftbetrieb die gewünschte, auch dauerhafte, Verbindung zur Umgebung bereitgestellt wird.

Bei Vorhandensein eines feuchteempfindlichen und/oder wärmeempfindlichen Stellglieds kann das Ventil insbesondere so ausgebildet sein, dass es zu seinem Betrieb bestromt wird und in seinem unbestromten Zustand die Verbindung zwischen dem ersten Tor und dem zweiten Tor offenhält. Erst im Betrieb und damit im bestromten Zustand kann dieses Ventil feuchte- und/oder wärmeabhängig umschalten.

Erfindungsgemäß weist das Dampfgargerät eine Dampfleitung auf, welche ein zu der Umgebung offenes Ende aufweist, welches mittels eines Dampfventils absperrbar ist. So kann bei geöffnetem Dampfventil eine zusätzlich Belüftung oder Entlüftung des Garraums erreicht werden. Das Dampfventil ist dazu eingerichtet, in einem ausgeschalteten Zustand oder bei einem Heißluftbetrieb des Dampfgargeräts offen zu sein und in einem Dampfbehandlungsbetrieb des Dampfgargeräts geschlossen oder wahlweise offen oder geschlossen zu sein.

Es ist noch eine Ausgestaltung, dass die Dampfleitung einen Abzweig zu einer Abwassereinrichtung, insbesondere Abwassertank, aufweist. So kann in der Dampfleitung kondensierte Flüssigkeit abgeführt werden.

Es ist eine Weiterbildung, dass Dampfgargerät eine Dampferzeugungseinheit zum Erzeugen von Dampf in dem Garraum aufweist. Es ist eine Weiterbildung, dass die Dampferzeugungseinheit einen Boiler oder einen Durchlauferhitzer aufweist. Ein Boiler mag insbesondere einen Wassertank aufweisen, welcher dazu eingerichtet ist, darin stehendes Wasser zu erhitzen und so Dampf zu erzeugen.

Es wird besonders bevorzugt, dass die Dampferzeugungseinheit eine Wasserbenetzungseinheit zum Benetzen einer Garraumheizung aufweist. So kann der Dampf auf besonders einfache Weise und zudem unverzüglich und ohne signifikante Nachlaufzeit erzeugt werden. Es wird besonders bevorzugt, dass sich diese Garraumheizung in dem Garraum befindet, da sich so der Dampf direkt in dem Garraum erzeugen lässt. Eine solche Heizung mag in einer Variante ein Oberhitzeheizkörper sein. Es ist eine weitere Variante, dass eine solche Heizung eine Ringheizung eines Heizluftgebläses ist. Dies weist den Vorteil auf, dass der entstehende Dampf bei Betrieb des zugehörigen Ventilators oder Gebläses sofort in dem Garraum verteilt wird. Die Wasserbenetzungseinheit kann zum Aufbringen des Wassers auf den Heizkörper beispielsweise einen Zerstäuber, z.B. einen Piezozerstäuber, oder eine andere Sprüheinrichtung aufweisen.

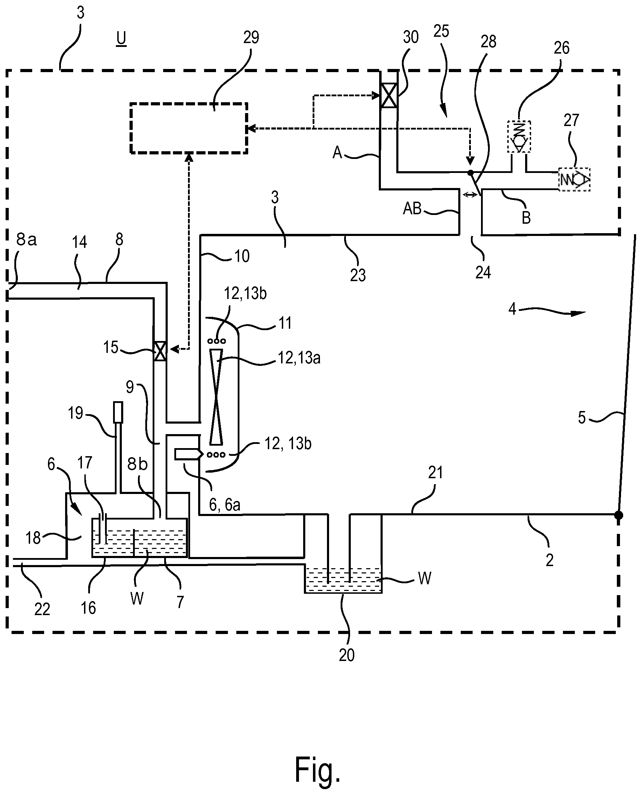

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit der Zeichnung näher erläutert wird. Dabei können zur Übersichtlichkeit gleiche oder gleichwirkende Elemente mit gleichen Bezugszeichen versehen sein.

Die **Fig.** zeigt als Schnittdarstellung in Seitenansicht ein Dampfgargerät 1 mit einer Heißluft- oder Backofenfunktion. Das Dampfgargerät 1 weist eine Garraumwandung oder Muffel 2 auf, welche einen Garraum 3 umschließt. Der Garraum 3 ist mit zu behandelnder Speise beschickbar, z.B. durch eine frontseitige Beschickungsöffnung 4, welche mit einer Tür 5 verschließbar ist. An einer Rückwand 10 der Muffel 2 ist eine Prallwand 11 (auch Luftleitblech genannt) angebracht, welche eine Umluftheizung 12 schützt. Die Umluftheizung 12 weist einen Ventilator 13a und eine diesen seitlich umgebende Ringheizung 13b auf. Der Garraum 3 mag zusätzlich durch einen Oberhitzeheizkörper und/oder einen Unterhitzeheizkörper (o. Abb.) beheizt werden. Das Dampfgargerät 1 weist zudem eine Dampferzeugungseinheit 6 auf, welche rein beispielhaft einen Sprühkopf 6a zu Sprühen von Wasser auf die Ringheizung 13b aufweist.

In die Rückwand 10 hinter der Prallwand 11 mündet eine Dampfleitung 8. Die Dampfleitung 8 weist einen ersten Abzweig 14 auf, der an einem ersten Ende 8a außerhalb des Garraums 3 (hier sogar außerhalb des Dampfgargeräts 1) endet. Der ersten Abzweig 14 ist mittels eines Absperrventils 15 wahlweise öffenbar und verschließbar. Die Dampfleitung 8 weist ferner zweiten Abzweig 9 auf, der an einem zweiten Ende 8b nach unten in einen Abwassertank 7 mündet.

Der Abwassertank 7 ist mit einem Überlaufgefäß 16 verbunden, welches eine Überlaufleitung 17 aufweist. Der Abwassertank 7 und das Überlaufgefäß 16 befinden sich in einer Kammer 18, welche mittels einer Entlüftungsleitung 19 entlüftbar ist. In die Kammer 18 führt auch ein Siphon 20, welcher an seiner anderen Seite mit einem Boden 21 der Muffel 2 verbunden ist. Über den Siphon 20 kann Kondensat aus dem Garraum 3 ablaufen, ohne dass Dampf und/oder Wrasen mit austreten können. Die Kammer 18 weist ferner einen Wasserablauf 22 auf.

An einer Oberseite 23 der Muffel 2 befindet sich eine Durchlassöffnung (im Folgenden als "Garraum-Durchlassöffnung" 24 bezeichnet), an welcher außenseitig der Muffel 2 ein Dreiwegeventil 25 angeschlossen ist. Das Dreiwegeventil 25 weist drei Tore oder Anschlüsse auf, nämlich: ein erstes, durchflussoffenes Tor AB, das an die Garraum-Durchlassöffnung 24 angeschlossen ist, ein zweites, durchflussvariables Tor A zu einer Umgebung U des Garraums 3 offen ist und ein drittes, durchflussvariables Tor B, das an zwei Absperrventile angeschlossen ist.

Das erste Absperrventil ist ein Überdruckventil 26, welches bei einem Überdruck in dem Garraum 3 im Vergleich zu einem Umgebungsdruck öffnet. Das zweite Absperrventil ist ein Unterdruckventil 27, welches bei einem Unterdruck in dem Garraum 3 im Vergleich zu einem Umgebungsdruck öffnet. Das Überdruckventil 26 und das Unterdruckventil 27 sind hier als federunterstützte Rückschlagventile, insbesondere Kugelrückschlagventile, ausgebildet, so dass sie sich mit Erreichen oder Überschreiten eines jeweilig vorbestimmten Absolutwerts des Druckunterschieds öffnen. Jedoch können das Überdruckventil 26 und/oder das Unterdruckventil 27 z.B. auch als Tellerrückschlagventil oder als eigengewichtgesteuerte Rückschlagklappe ausgebildet sein.

Das Dreiwegeventil 25 ist ein, z.B. über eine Steuerschaltung 29, bestrombares Ventil mit einem wärmeempfindlichen Stellglied 28. Das Dreiwegeventil 25 verbindet in seinem nicht bestromten oder ausgeschalteten Zustand das erste Tor AB mit dem zweiten Tor A, während das dritte Tor B dagegen absperrt, so wie hier schematisch gezeigt. Dies gilt unabhängig von einer an dem Stellglied 28 anliegenden Temperatur. Dadurch kann der Garraum 3 im ausgeschalteten Zustand des Dampfgargeräts 1 oder ggf. auch, wenn kein Speisenbehandlungsbetrieb aktiviert ist, mit der Umgebung U verbunden sein und so z.B. austrocknen. Das Tor A mag sich grundsätzlich in eine Umgebung U in Form eines Bereichs des Dampfgargeräts 1 außerhalb der Muffel 2 öffnen oder mag, wie eingezeichnet, mit einer Umgebung U außerhalb des Dampfgargeräts 1 verbunden sein, z.B. über einen Schlauch. Das Tor A mag, wie eingezeichnet, optional über ein Absperrventil 30 mit der Umgebung U verbunden sein, um diese Verbindung gezielt sperren oder öffnen zu können. Das Absperrventil 30 mag dazu über die Steuerschaltung 29 steuerbar sein.

Im bestromten Zustand sperrt das wärmeempfindliche Stellglied 28 abhängig von einer daran anliegenden Temperatur entweder Tor B oder Tor A, wie durch den dort eingezeichneten Doppelpfeil angedeutet. In anderen Worten ist mittels des wärmeempfindlichen Stellglieds 28 eine pneumatische Verbindung von dem ersten Tor AB zu dem zweiten Tor A oder zu dem dritten Tor B umschaltbar. Die an dem wärmeempfindlichen Stellglied 28 anliegende Temperatur ist mit einer Temperatur in dem Garraum 3 korreliert. Genauer gesagt sperrt das wärmeempfindliche Stellglied 28 bei einer niedrigen Temperatur, wie sie in einem typischen Dampfbehandlungsbetrieb auftritt, das Tor A, was gleichbedeutend damit ist, dass eine pneumatische Verbindung zwischen dem ersten Tor AB zu dem dritten Tor B bereitgestellt wird. Bei einer höheren Temperatur, wie sie in einem typischen Heißluftbetrieb auftritt, wird hingegen das Tor B gesperrt, was gleichbedeutend damit ist, dass eine pneumatische Verbindung zwischen dem ersten Tor AB zu dem zweiten Tor A bereitgestellt wird.

Bei einem Heißluftbetrieb wird, z.B. mittels des Ringheizkörpers 13b der Umluftheizung 12, Luft in dem Garraum 3 aufgeheizt, z.B. zum Backen einer in den Garraum 3 eingebrachten Speise. Dabei wird kein Dampf benötigt, so dass der Sprühkopf 6a der Dampferzeugungseinheit 6 nicht aktiviert und kein Wasser (z.B. Wassertröpfchen oder Wassernebel) auf den heißen Ringheizkörpers 13b sprüht. Das Dampfventil 15 mag dabei das erste Ende 8a der Dampfleitung 14 offen lassen, um eine gezielte Abfuhr von erwärmter Luft und/oder Wrasen zu ermöglichen. Das Dampfventil 15 mag das erste Ende 8a der Dampfleitung 14 aber auch geschlossen lassen, um einen Energieverlust zu verringern. Das Dampfventil 15 mag dazu über die Steuerschaltung 29 steuerbar sein.

Bei dem Heißluftbetrieb ist die an dem wärmeempfindlichen Stellglied 28 anliegende Temperatur so hoch, dass es das Tor B sperrt und eine Verbindung zwischen dem Garraum 3 und dem Tor A öffnet, z.B. für eine Frischluftzufuhr.

Bei einem Dampfbehandlungsbetrieb ist der Sprühkopf 6a der Dampferzeugungseinheit 6 aktiviert und sprüht Wasser (z.B. Wassertröpfchen oder Wassernebel) bei Bedarf auf den heißen Ringheizkörpers 13b. Das Dampfventil 15 ist geschlossen. Während des Dampfbehandlungsbetriebs sind die Temperaturen in dem Garraum 3 und damit an dem wärmeempfindlichen Stellglied 28 erheblich geringer als bei einem Heißluftbetrieb, so dass das wärmeempfindliche Stellglied 28 nun das zweite Tor A sperrt und so die Verbindung von dem Garraum 3 zu dem Überdruckventil 26 und zu dem Unterdruckventil 27 herstellt. Insgesamt wird so verhindert, dass Dampf regelmäßig aus dem Garraum 3 austreten kann, wodurch energetische Verluste vermeidbar sind. Dampf kann nur austreten, falls sich in dem Garraum 3 ein erheblicher Überdruck gebildet hat, so dass das Überdruckventil 26 unter Druckausgleich öffnet. Das Unterdruckventil 27 hingegen öffnet bei einem vorbestimmten Unterdruck in dem Garraum 3, welcher sich beispielsweise durch eine Kondensation einstellen kann. Dadurch kann zum Druckausgleich Umgebungsluft in den Garraum 3 strömen. Auch das Überdruckventil 26 und das Unterdruckventil 27 können in eine Umgebung U innerhalb des Dampfgargeräts 1 oder außerhalb des Dampfgargeräts 1 münden und so z.B. Dampf in das Dampfgargerät 1 oder außerhalb des Dampfgargeräts 1 ablassen bzw. von dort Luft ansaugen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw. Auch kann eine Zahlenangabe genau die angegebene Zahl als auch einen üblichen Toleranzbereich umfassen, solange dies nicht explizit ausgeschlossen ist.

### Bezuaszeichenliste

- 1: Dampfgargerät
- 2: Muffel
- 3: Garraum
- 4: Beschickungsöffnung
- 5: Tür
- 6: Dampferzeugungseinheit
- 6a: Sprühkopf
- 7: Abwassertank
- 8: Dampfleitung
- 8a: erstes Ende der Dampfleitung
- 8b: zweites Ende der Dampfleitung
- 9: erster Abzweig
- 10: Rückwand
- 11: Prallwand
- 12: Umluftheizung
- 13a: Ventilator
- 13b: Ringheizung
- 14: zweiter Abzweig
- 15: Absperrventil
- 16: Überlaufgefäß
- 17: Überlaufleitung
- 18: Kammer
- 19: Entlüftungsleitung
- 20: Siphon
- 21: Boden
- 22: Wasserablauf
- 23: Oberseite der Muffel
- 24: Garraum-Durchlassöffnung
- 25: Dreiwegeventil
- 26: Überdruckventil
- 27: Unterdruckventil
- 28: Stellglied
- 29: Steuerschaltung
- 30: Absperrventil
- AB: erstes durchflussoffenes Tor
- A: zweites durchflussvariables Tor
- B: drittes durchflussvariables Tor
- U: Umgebung
- W: Wasser

## Patentansprüche

1. Dampfgargerät (1), aufweisend
- einen Garraum (3) mit einer Garraum-Durchlassöffnung (24) und ein mit der Garraum-Durchlassöffnung (24) verbundenes Ventil (25) und
- eine Dampfleitung (14), die ein zu der Umgebung (U) offenes Ende (8a) aufweist, welches mittels eines Dampfventils (15) absperrbar ist,
- welches Dampfventil (15) dazu eingerichtet ist, in einem ausgeschalteten Zustand oder bei einem Heißluftbetrieb des Dampfgargeräts (1) offen zu sein und in einem Dampfbehandlungsbetrieb des Dampfgargeräts (1) geschlossen zu sein,
**dadurch gekennzeichnet, dass**
- das Ventil (25) ein Dreiwegeventil mit drei Toren (A, B, AB) ist,
- dessen erstes, durchflussoffenes Tor (AB) an die Garraum-Durchlassöffnung (24) angeschlossen ist,
- dessen zweites, durchflussvariables Tor (A) zu einer Umgebung (U) des Garraums (3) offen ist und
- dessen drittes, durchflussvariables Tor (B) an mindestens ein Absperrventil (26, 27) angeschlossen ist.

2. Dampfgargerät (1) nach Anspruch 1, **dadurch gekennzeichnet, dass** das dritte Tor (B) pneumatisch parallel an ein Überdruckventil (26) und an ein Unterdruckventil (27) angeschlossen ist.

3. Dampfgargerät (1) nach Anspruch 2, **dadurch gekennzeichnet, dass** das Überdruckventil (26) ein federunterstütztes Rückschlagventil ist und das Unterdruckventil (27) eine Rückschlagklappe ist.

4. Dampfgargerät (1) nach einem der vorhergehenden Ansprüche, **dadurch gekennzeichnet, dass** eine pneumatischen Verbindung von dem ersten Tor (AB) zu dem zweiten Tor (A) oder zu dem dritten Tor (B) mittels eines wärmeempfindlichen Stellglieds (28) und/oder mittels eines feuchteempfindlichen Stellglieds (28) umschaltbar ist.

5. Dampfgargerät (1) nach einem der vorhergehenden Ansprüche, **dadurch gekennzeichnet, dass** das Ventil (25) dazu eingerichtet ist,
- in einem ausgeschalteten Zustand oder bei einem Heißluftbetrieb des Dampfgargeräts (1) eine pneumatische Verbindung zwischen dem ersten Tor (AB) zu dem zweiten Tor (A) bereitzustellen und
- in einem Dampfbehandlungsbetrieb des Dampfgargeräts (1) eine pneumatische Verbindung zwischen dem ersten Tor (AB) zu dem dritten Tor (B) bereitzustellen.

6. Dampfgargerät (1) nach den Ansprüchen 4 und 5, **dadurch gekennzeichnet, dass** das Ventil (25) zu seinem Betrieb bestrombar ist und in seinem unbestromten Zustand eine Verbindung zwischen dem ersten Tor (AB) und dem zweiten Tor (A) offenhält und nur in seinem bestromten Zustand feuchte- und/oder wärmeabhängig umschaltbar ist.

7. Dampfgargerät (1) nach einem der vorhergehenden Ansprüche, **dadurch gekennzeichnet, dass** das Dampfventil (15) über eine Steuerschaltung (29) steuerbar ist.

8. Dampfgargerät (1) nach einem der vorhergehenden Ansprüche, **dadurch gekennzeichnet, dass**
- das Ventil (25) von der Dampfleitung (14) durch den Garraum (2) getrennt ist,
- sich die Garraum-Durchlassöffnung (24) an einer Oberseite (23) einer den Garraum (3) umschließenden Muffel (2) befindet und
- die Dampfleitung (14) eine sich in den Garraum (3) öffnende Mündung aufweist, die sich an einer Rückwand (10) der Muffel (2) hinter einer Prallwand (11) befindet.

9. Dampfgargerät (1) nach einem der vorhergehenden Ansprüche, **dadurch gekennzeichnet, dass** die Dampfleitung (14) einen Abzweig (9) aufweist, der in einen Abwassertank (7) mündet.

## Claims

1. Steam cooking device (1) having
- a cooking compartment (3) with a cooking compartment through-opening (24) and a valve (25) connected to the cooking compartment through-opening (24) and
- a steam line (14) which has an end (8a) which is open to the ambient area (U) and can be shut off by means of a steam valve (15),
- said steam valve (15) being designed to be open in a turned-off state or in a hot air mode of the steam cooking device (1) and to be closed in a steam-treatment mode of the steam cooking device (1),
**characterised, in that**
- the valve (25) is a three-way valve with three ports (A, B, AB),
- whose first, open-flow port (AB) is connected to the cooking compartment through-opening (24),
- whose second, variable-flow port (A) is open to an ambient area (U) of the cooking compartment (3) and
- whose third, variable-flow port (B) is connected to at least one shut-off valve (26, 27).

2. Steam cooking device (1) according to claim 1, **characterised in that** the third port (B) is connected pneumatically parallel to a pressure relief valve (26) and to a vacuum valve (27).

3. Steam cooking device (1) according to claim 2, **characterised in that** the pressure relief valve (26) is a spring-assisted non-return valve and the vacuum valve (27) is a drain check valve.

4. Steam cooking device (1) according to one of the preceding claims, **characterised in that** a pneumatic connection can be switched from the first port (AB) to the second port (A) or to the third port (B) by means of a heat-sensitive actuator (28) and/or by means of a moisture-sensitive actuator (28).

5. Steam cooking device (1) according to one of the preceding claims, **characterised in that** the valve (25) is designed to
- provide a pneumatic connection between the first port (AB) and the second port (A) in an off state or in a hot air mode of the steam cooking device (1), and
- to provide a pneumatic connection between the first port (AB) and the third port (B) in a steam treatment mode of the steam cooking device (1).

6. Steam cooking device (1) according to claims 4 and 5, **characterised in that** the valve (25) can be energised for its operation and in its non-energised state keeps open a connection between the first port (AB) and the second port (A) and can only be switched as a function of moisture and/or heat in its energised state.

7. Steam cooking device (1) according to one of the preceding claims, **characterised in that** the steam valve (15) can be controlled by way of a control circuit (29).

8. Steam cooking device (1) according to one of the preceding claims, **characterised in that**
- the valve (25) is separated from the steam line (14) by the cooking compartment (2),
- the cooking compartment through-opening (24) is located on an upper side (23) of a muffle (2) surrounding the cooking compartment (3) and
- the steam line (14) has an outlet which opens into the cooking compartment (3) and is located on a rear wall (10) of the muffle (2) behind a baffle wall (11).

9. Steam cooking device (1) according to one of the preceding claims, **characterised in that** the steam line (14) has a branch (9) which opens into a waste water tank (7).

## Revendications

1. Appareil de cuisson à la vapeur (1) présentant
- une chambre de cuisson (3) munie d'une ouverture de passage (24) de chambre de cuisson, et une vanne (25) reliée à l'ouverture de passage (24) de chambre de cuisson, et
- une conduite de vapeur (14) qui présente une extrémité (8a) ouverte vers les environs (U), laquelle peut être bloquée au moyen d'une vanne à vapeur (15),
- laquelle vanne à vapeur (15) est conçue, dans un état éteint ou lors d'un fonctionnement à air chaud de l'appareil de cuisson à la vapeur (1), pour être ouverte et, dans un fonctionnement de traitement à la vapeur de l'appareil de cuisson à la vapeur (1), pour être fermée,
**caractérisé en ce que**
- la vanne (25) est une vanne à trois voies munie de trois portes (A, B, AB),
- dont la première porte (AB) ouverte au débit est raccordée à l'ouverture de passage (24) de chambre de cuisson,
- dont la deuxième porte (A) à débit variable est ouverte vers des environs (U) de la chambre de cuisson (3), et
- dont la troisième porte (B) à débit variable est raccordée à au moins une vanne d'arrêt (26, 27).

2. Appareil de cuisson à la vapeur (1) selon la revendication 1, **caractérisé en ce que** la troisième porte (B) est pneumatiquement raccordée parallèlement à une vanne de surpression (26) et à une vanne de dépression (27).

3. Appareil de cuisson à la vapeur (1) selon la revendication 2, **caractérisé en ce que** la vanne de surpression (26) est une valve anti-retour soutenue par ressort et **en ce que** la vanne de dépression (27) est un clapet anti-retour.

4. Appareil de cuisson à la vapeur (1) selon l'une quelconque des revendications précédentes, **caractérisé en ce qu'**une liaison pneumatique est commutable de la première porte (AB) vers la deuxième porte (A) ou vers la troisième porte (B) au moyen d'un organe de réglage (28) sensible à la chaleur et/ou au moyen d'un organe de réglage (28) sensible à l'humidité.

5. Appareil de cuisson à la vapeur (1) selon l'une quelconque des revendications précédentes, **caractérisé en ce que** la vanne (25) est conçue,
- dans un état arrêté ou lors d'un fonctionnement à air chaud de l'appareil de cuisson à la vapeur (1), pour fournir une liaison pneumatique entre la première porte (AB) vers la deuxième porte (A), et,
- dans un état de traitement à la vapeur de l'appareil de cuisson à la vapeur (1), pour fournir une liaison pneumatique entre la première porte (AB) vers la troisième porte (B).

6. Appareil de cuisson à la vapeur (1) selon l'une quelconque des revendications 4 et 5, **caractérisé en ce que** la vanne (25) peut être alimentée en courant pour son fonctionnement et **en ce que** dans son état non alimenté en courant, elle maintient une liaison entre la première porte (AB) et la deuxième porte (A) et **en ce qu'**elle est commutable en fonction de l'humidité et/ou de la chaleur seulement dans son état alimenté en courant.

7. Appareil de cuisson à la vapeur (1) selon l'une quelconque des revendications précédentes, **caractérisé en ce que** la vanne à vapeur (15) peut être commandée par l'intermédiaire d'un circuit de commande (29).

8. Appareil de cuisson à la vapeur (1) selon l'une quelconque des revendications précédentes, **caractérisé en ce que**
- la vanne (25) est séparée de la conduite de vapeur (14) par la chambre de cuisson (2),
- l'ouverture de passage (24) de chambre de vapeur se trouve sur un côté supérieur (23) d'un moufle (2) entourant la chambre de cuisson (3), et **en ce que**
- la conduite de vapeur (14) présente une embouchure s'ouvrant dans la chambre de cuisson (3), laquelle se trouve sur une paroi arrière (10) du moufle (2) derrière une paroi d'impact (11).

9. Appareil de cuisson à la vapeur (1) selon l'une quelconque des revendications précédentes, **caractérisé en ce que** la conduite de vapeur (14) présente un embranchement (9) qui débouche dans un réservoir d'eau (7).
